Europäisches Patentamt

European Patent Office

Office européen des brevets

(11) Veröffentlichungsnummer: **0 438 781 A2**

# (12) EUROPÄISCHE PATENTANMELDUNG

(21) Anmeldenummer: 90125502.6

(22) Anmeldetag: 27.12.90

(51) Int. Cl.5: **B32B 27/10,** B32B 29/04

(30) Priorität: 22.01.90 DE 4001749

(43) Veröffentlichungstag der Anmeldung:
31.07.91 Patentblatt 91/31

(84) Benannte Vertragsstaaten:
AT BE CH DE DK ES FR GB GR IT LI LU NL SE

(71) Anmelder: ZWECKFORM ETIKETTIERTECHNIK
GESELLSCHAFT MIT BESCHRÄNKTER
HAFTUNG
Industriestrasse 2
W-8150 Holzkirchen(DE)

(72) Erfinder: Busler, Robert
Schönstrasse 80 a
W-8000 München 90(DE)

(74) Vertreter: Fincke, Karl Theodor, Dipl.-Phys.Dr.
et al
Patentanwälte Dipl.-Ing. H.Weickmann
Dipl.-Phys.Dr. K.Fincke Dipl.-Ing.
F.A.Weickmann Dipl.-Chem. B. Huber Dr. Ing.
H. Liska Dipl.-Phys.Dr. J. Prechtel
Möhlstrasse 22
W-8000 München 80(DE)

(54) Verbundmaterial.

(57) Die Erfindung betrifft ein Verbundmaterial mit
einer Schicht aus Papier, dessen eine Seite mit einer
Schicht aus einem pulperisierungsfesten Material
versehen ist, dadurch gekennzeichnet, daß auf der
Seite des Papiers bei einem Pulperisieren lösbar die
eine Seite eines Films aus einem pulperisierungsfesten Material haftet und daß an der anderen Seite
dieses Films die Schicht aus dem pulperisierungsfesten Material haftet.

EP 0 438 781 A2

## VERBUNDMATERIAL

Die Erfindung betrifft ein Verbundmaterial nach dem Oberbegriff des Anspruchs 1, insbesondere ein Etikett, dessen Unterseite mit einer Schicht aus Haftklebstoff (einem unter Druck haftfähig werdenden Klebstoff) versehen ist, oder einen Etikettenträger, dessen Oberseite mit einer Schicht aus Silikon versehen ist.

Verbundmaterial dieser Art bereitet bei der Altpapieraufbereitung (Recycling) Schwierigkeiten. Der Klebstoff bzw. das Silikon läßt sich bei der Aufbereitung nicht neutralisieren.

Aufgabe der Erfindung ist es, ein Verbundmaterial nach dem Oberbegriff des Anspruchs 1 anzugeben, bei dessen Aufbereitung, insbesondere wenn es als Etikett mittels des Klebstoffs auf aufzubereitendem Unterlegmaterial aus Papier, Karton, Pappe oder dergleichen aufgeklebt ist oder lösbar auf einem Etikettenträger haftet oder wenn es als Etikettenträger verwendet wird, der Klebstoff bzw. das Silikon ohne beträchtliche Schwierigkeit abtrennbar ist.

Die Lösung dieser Aufgabe ist in Anspruch 1 angegeben.

Bei einer Aufbereitung löst sich der Film von dem Etikett mit dem an ihm haftenden Klebstoff von der Unterseite des Papiers und kann, ohne daß der Klebstoff das Pulperisieren stört, ausgesondert werden, denn der abgesonderte Film mit dem an ihm haftenden Klebstoff schwimmt beim Pulperisieren auf der hierzu verwendeten Flüssigkeit. Entsprechendes gilt für die Absonderung des Films mit dem an ihm haftenden Silikon auf dem Etikettenträger.

Der Film besteht bevorzugt aus den in Anspruch 2 angegebenen Materialien. Diese Materialien sind nicht nur pulperisierungsfest, sondern auch thermisch stabil, so daß das Verbundmaterial gegenüber Temperaturschwankungen dimensionsstabil ist, was insbesondere für die eingangs genannten Etiketten wichtig ist, wenn sie während eines Bedruckungsvorgangs thermisch belastet werden.

Außerdem haftet der Klebstoff an einem aus den genannten Materialien bestehenden Film besonders stark, so daß die Haftung durch die mechanischen, thermischen und chemischen Einflüsse bei der Aufbereitung nicht oder fast nicht beeinträchtigt wird.

Bei der Aufbereitung trennt sich das Papier in Form von Fasern von dem Verbundmaterial. Die von dem Klebstoff freien Fasern sind ohne Schwierigkeit aufzubereiten.

Selbst diejenigen Filme mit dem an ihnen haftenden Klebstoff, die nicht auf der Pulperisierungsflüssigkeit schwimmen, sind nicht kalibrierfähig und gelangen daher nicht in das aufbereitete Papier. Wesentlich ist bei alledem an sich nicht die Erhöhung des nutzbaren Faseranteils aus dem Verbundmaterial, insbesondere der Etiketten, sondern die Verhinderung oder Minderung von Störungen beim Herstellen von Recycling-Papier.

Nicht ausgesonderte Klebstoffe führen zu Ausfällungen, Ablagerungen und Verklebungen in den Anlagen und verursachen technische Störungen bis hin zum Bahnriß in der Papiermaschine. Der entsprechende Störzeitenanteil liegt bei 10 bis 20 %.

Besonders bewährt haben sich die in Anspruch 2 angegebenen Filmmaterialien und die in Anspruch 3 angegebenen Filmdicken.

Das Aufbringen des Films auf die Unterseite des Papiers kann in unterschiedlicher Weise erfolgen.

Besonders bewährt haben sich die in Anspruch 4 bis 9 angegebenen Maßnahmen.

Das Aufbringen des Klebstoffs erfolgt bevorzugt gemäß Anspruch 12 bzw. 13, bevorzugt unter Verwendung der in Anspruch 11 bzw. 14 angegebenen Materialien.

Die Erfindung wird im folgenden an Ausführungsbeispielen unter Hinweis auf die beigefügten Zeichnungen beschrieben.

Die Figuren 1 bis 4 zeigen unterschiedliche Schichtaufbauten von Etiketten auf einem Etikettenträger.

Die Figuren 5 und 6 zeigen unterschiedliche Schichtaufbauten von Etikettenträgern.

Gleiche Bezugsziffern bezeichnen gleiche Elemente.

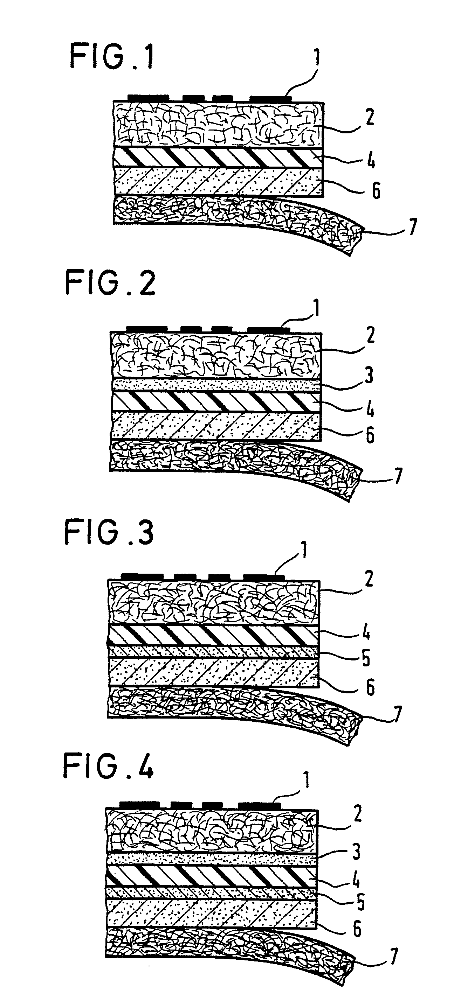

Bei der Ausführungsform nach Fig. 1 befindet sich auf einem pulperisierungsfähigen Papier 2 ein Druck 1. Auf die Unterseite des Papiers ist ein Film 4 aus einem pulperisierungsfesten Material extrudiert bzw. aufgetragen. Auf der Unterseite des Films 4 befindet sich eine Schicht 6 aus Haftklebstoff. Die Schichten 1, 2, 4 und 6 bilden das Etikett. Dieses Etikett befindet sich lösbar auf einer klebstoffabweisenden Schicht eines Etikettenträgers 7.

Das Etikett nach Fig. 2 unterscheidet sich von dem Etikett nach Fig. 1 darin, daß auf die Unterseite des Papiers ein Film aus pulperisierungsfestem Material mittels einer Kaschierklebstoffschicht 3 kaschiert ist.

Die Ausführungsform nach Fig. 3 unterscheidet sich von derjenigen nach Fig. 1 darin, daß auf die Unterseite des Films 4 eine Haftstoffschicht 6 vermittels einer Primerschicht (Haftvermittlerschicht) 5 aufgebracht ist.

Das Ausführungsbeispiel nach Fig. 4 stellt eine Kombination der Ausführungsform gemäß Fig. 2 und Fig. 3 dar.

Der Film erhöht die mechanische Festigkeit der Etiketten und erleichtert dadurch das Abziehen von zwischen den Etiketten befindlichem gitterförmigem Etikettenmaterial bei der Herstellung. Außerdem verhindert der Film eine Klebstoffwanderung in das Papier.

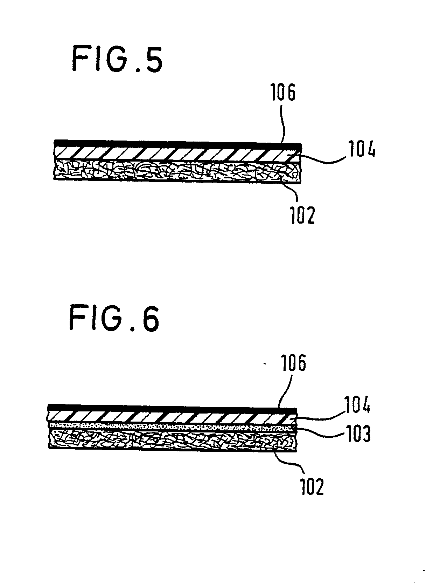

Bei dem Etikettenträger nach Fig. 5 befindet sich auf einem Trägerpapier 102 ein Kunststoffilm 104, der eine Silikonschicht 106 trägt.

Bei dem Etikettenträger nach Fig. 6 befindet sich zwischen dem Trägerpapier 102 und dem Kunststoffilm 104 eine Kaschierklebstoffschicht 103.

Die Etikettenträger nach Fig. 5 und 6 eignen sich besonders als Zuschnitte mit aufgebrachten Etiketten zu Verpackungszwecken zum Beispiel zu Zeitschriften. Durch die Schichtfolge der Zuschnitte erhält man eine gute Planlage der Zuschnitte, was für ein automatisches Beipacken wesentlich ist. Dadurch, daß sich die Silikonschicht 106 auf dem Kunststoffilm 104 befindet, wird eine Anreicherung der Recycling-Pulpe mit Silikon vermieden und dadurch die Bedruckbarkeit und Verklebbarkeit des aus dieser Pulpe hergestellten Recycling-Papiers verbessert. Besteht das Trägerpapier 102 bereits aus Recycling-Papier, so wird durch den Kunststoffilm 104 die Silikonisierung erleichtert, weil die Oberfläche des Recycling-Papiers gegenüber Silikonisierung chemisch nicht neutral ist, was zu Vernetzungsstörungen in der Silikonschicht führt. Der Kunststoffilm verhindert auch, daß das Silikon in das Trägerpapier 102 eindringt. Überdies vergrößert der Kunststoffilm die mechanische Festigkeit des Verbunds, was das Stanzen erleichtert.

Der Kunststoffilm wirkt in seiner Ebene stabilisierend und erhöht somit die Reißfestigkeit des Trägerpapiers und als Puffer rechtwinklig zu seiner Ebene, was das Stanzen des Verbunds erleichtert. Der Film verhindert außerdem einerseits eine Wanderung von Papierbestandteilen in die Silikonschicht 106 bzw. in die Haftstoffschicht 6 und unterbindet das Wegschlagen des Silikons oder des Haftklebstoffs in das Papier, so daß keine Beschichtungsmassen auf der Oberfläche des Verbunds auftreten.

**Patentansprüche**

1. Verbundmaterial mit einer Schicht aus Papier (2; 102), dessen eine Seite mit einer Schicht aus einem pulperisierungsfesten Material (6; 106) versehen ist,
   **dadurch gekennzeichnet;**
   daß auf der Seite des Papiers (2; 102) bei einem Pulperisieren lösbar die eine Seite eines Films (4; 104) aus einem pulperisierungsfesten Material haftet und daß an der anderen Seite dieses Films (4; 104) die Schicht aus dem pulperisierungsfesten Material (6; 106) haftet.

2. Verbundmaterial nach Anspruch 1, dadurch gekennzeichnet, daß der Film (4; 104) aus einem Polyethylen, einem Polypropylen, einem Polyester, einem Polystyrol, einem Polyvinylchlorid oder einem Copolymerisat dieser Materialien, insbesondere einem Polypropylen/Polyethylen-Copolymerisat besteht.

3. Verbundmaterial nach Anspruch 1 oder 2, dadurch gekennzeichnet, daß der Film (4; 104) eine Dicke von 5 bis 50 $\mu$m aufweist.

4. Verbundmaterial nach einem der Ansprüche 1 bis 3, dadurch gekennzeichnet, daß der Film (4; 104) direkt an der Seite des Papiers (2; 102) haftet.

5. Verbundmaterial nach einem der Ansprüche 1 bis 3, dadurch gekennzeichnet, daß der Film (4; 104) vermittels eines pulperisierungsfesten Kaschierklebers (3; 103) an der Seite des Papiers (2; 102) haftet.

6. Verbundmaterial nach einem der Ansprüche 1 bis 4, dadurch gekennzeichnet, daß der Film (4; 104) auf der Seite des Papiers (2; 102) extrudiert ist.

7. Verbundmaterial nach einem der Ansprüche 1 bis 3 und 5, dadurch gekennzeichnet, daß der Film (4; 104) auf die Seite des Papiers (2; 102) kaschiert ist.

8. Verbundmaterial nach einem der Ansprüche 1 bis 4, dadurch gekennzeichnet, daß der Film (4; 104) auf der Seite des Papiers (2; 102) durch Vernetzen einer auf die Seite des Papiers (2; 102) flüssig aufgebrachten Kunststoffmasse gebildet ist.

9. Verbundmaterial nach Anspruch 8, dadurch gekennzeichnet, daß die Kunststoffmasse als Basismaterial ein Acrylat oder ein Polyurethan aufweist.

10. Verbundmaterial nach einem der vorstehenden Ansprüche, dadurch gekennzeichnet, daß das pulperisierungsfeste Material (6) ein Haftklebstoff (6) ist.

11. Verbundmaterial nach Anspruch 10, dadurch gekennzeichnet, daß der Klebstoff (6) auf einem Acrylat oder einem Kautschuk basiert.

12. Verbundmaterial nach Anspruch 11, dadurch gekennzeichnet, daß der Klebstoff (6) mittels einer Ladungsschicht (Koronabeladungsschicht) auf der Unterseite des Films (4) haftet.

13. Verbundmaterial nach einem der Ansprüche 10 bis 12, dadurch gekennzeichnet, daß der Klebstoff (6) vermittels eines pulperisierungsfesten Primers (Haftvermittlers) (5) auf der Unterseite des Films (4) haftet.

14. Verbundmaterial nach Anspruch 13, dadurch gekennzeichnet, daß der Primer aus einem Acrylat, einem Polyurethan, einem Polyester, einem Ethylenvinylacetat, einem Polyvinylchlorid, einem Polyvinylidenchlorid oder einem Copolymerisatdieser Materialien, insbesondere einem Acrylat/Polyvinylchlorid-Copolymerisat, besteht.

15. Verbundmaterial nach einem der Ansprüche 1 bis 9, dadurch gekennzeichnet, daß das pulperisierungsfeste Material (106) ein Haftklebstoff (6) abweisendes Material ist.

FIG.1

FIG.2

FIG.3

FIG.4

# FIG.5

106
104
102

# FIG.6

106
104
103
102